# EUROPEAN PATENT SPECIFICATION

(11) **EP 2 295 834 B1**
(45) Date of publication and mention of the grant of the patent: **09.01.2013**
(21) Application number: 09794585.1
(22) Date of filing: 16.06.2009
(51) Int. Cl.: F28D 9/00, F28F 3/04

(54) **OIL COOLER FOR TRANSMISSION**
ÖLKÜHLER FÜR EIN GETRIEBE
REFROIDISSEUR D'HUILE POUR TRANSMISSION

(30) Priority: 10.07.2008 KR 20080067008; 10.07.2008 KR 20080067004
(43) Date of publication of application: 16.03.2011
(73) Proprietor: Korea Delphi Automotive Systems Corporation, Daegu 711-857 (KR)
(72) Inventor: HAN, Sang Chul, Dalseong-gun Daegu 711-857 (KR); CHOI, Sin Il, Dalseong-gun Daegu 711-857 (KR); TAE, Hyuk Chan, Dalseong-gun Daegu 711-857 (KR)
(74) Representative: Caspary, Karsten
(86) International application number: PCT/KR2009/003200
(87) International publication number: WO 2010/005179

(56) References cited:
- WO-A1-88/04761
- GB-A- 2 026 676
- JP-A- 9 138 082
- KR-A- 20030 051 213
- KR-Y1- 200 269 279
- KR-Y1- 950 002 648
- US-A- 6 016 865
- US-A1- 2008 078 538

## Description

### BACKGROUND OF THE INVENTION

### 1. Field of the Invention

The present invention relates generally to transmission oil coolers and, more particularly, to a transmission oil cooler which enhances the heat exchange efficiency and has enhanced assembly performance.

### 2. Description of the Related Art

Transmissions for vehicles convert the unidirectional rotating force of engines into the drive force of the vehicles. Transmissions are indispensable to changing the driving directions of vehicles, for example, between forward movement and backward movement, or to controlling the speed of the vehicles. Transmissions are classified into a variety of types, for example, a manual transmission, an automatic transmission, a continuously variable transmission (CVT), etc.

Such a transmission includes therein a plurality of operating elements, such as gears, etc. Transmission oil circulates in the transmission to lubricate or clean these operating elements. When the transmission is operated, the transmission oil is heated by heat transferred from the elements. Thus, the viscosity of the transmission oil is markedly reduced, resulting in a loss of the inherent function. Therefore, an oil cooler is generally used to cool the transmission oil.

Typically, the oil cooler is located in a radiator and is thus cooled by radiator coolant.

The oil cooler included in the radiator is constructed such that heat exchange tubes are stacked one on top of another. The heat exchange tubes form oil paths through which oil passes. Each heat exchange tube comprises a pair of plates. The plates are coupled to each other by brazing the perimeters thereof, thus forming the oil path between the plates. Furthermore, the stacked heat exchange tubes are spaced apart from each other at regular intervals so that a coolant path is formed between the heat exchange tubes.

Each heat exchange tube has an inlet port and an outlet port on the respective opposite ends thereof. The oil paths of the heat exchange tubes communicate with each other using the inlet ports and the outlet ports.

However, in the conventional oil cooler, the cross-sectional areas of the coolant path and the oil path are comparatively small, thus deteriorating the heat exchange efficiency of the oil cooler.

Furthermore, with regard to the assembly of the heat exchange tubes, because the assemblability and sealability between the inlet ports and the outlet ports of the heat exchange tubes are comparatively low, the leakage of oil or coolant may take place after the assembly of the heat exchange tubes has been completed.

US 6,016,865 A, in accordance with the preamble of claim 1, discloses a plate heat exchanger wherein heat transfer plates are in pairs welded together to form cassettes. The two plates in every cassette bear on each other via corrugation ridges, which are crossing each other and create a flow path between them for a first fluid. The cassettes bear on each other via elevations, which are higher than the corrugation ridges on the outsides of the cassettes. Between the cassettes flow paths are delimited for a second fluid. The main directions of flow for the two fluids are in parallel. Each one of the mentioned elevations is elongated and ex-tends with its longitudinal axis substantially in parallel with the main directions of flow for the fluids, bridging at most two valleys between corrugation ridges extending next to each other.

WO 88/04761 A1 discloses a plate heat exchanger for insertion in a tank which forms part of a vehicle cooler, has a plurality of stacked, flat tubes which consist of a first and a second tube half provided each with one circumferential edge flange, said flanges sealingly engaging with one another and forming a lap joint, and which have at each end a hole to establish communication between the tubes and to form an inlet chamber and an outlet chamber for the fluid to be cooled. The lap joint extends in the direction of the tube thickness in order to form a tube, the inner width of which differs from the outer width by the formula: bᵢ = b_{y} - 4t wherein bᵢ = the inner width of the tube, b_{y} = the outer width of the tube, and t = the thickness of the edge flange.

GB 2 026 676 A describes a plate heat exchanger for cooling lubricating oil in internal combustion engines comprises a plurality of superimposed, spaced- apart flattened conduits each formed by two superimposed plates welded together around their edges, each conduit having, in each plate thereof, an inlet and an outlet opening, the inlet openings together defining, in the heat exchanger an inlet duct and the output openings together defining an outlet duct. Each plate has extending from the rim of at least one of its openings a respective attachment member, in the form of an integral tubular member having notches therearound defining lugs between the notches. Each attachment member extends to within the attachment member of an adjoining conduit and is welded to the last mentioned attachment member.

### SUMMARY OF THE INVENTION

Accordingly, the present invention has been made keeping in mind the above problems occurring in the prior art, and an object of the present invention is to provide a transmission oil cooler which enhances the heat exchange efficiency and has enhanced assemblability.

In order to accomplish the above object, the present invention provides a transmission oil cooler according to the features of claim 1.

The protrusions may comprise a plurality of upper pin-shaped protrusions provided on the corresponding ridges of the upper plates, and a plurality of lower pin-shaped protrusions provided on the corresponding ridges of the lower plates. The upper pin-shaped protrusions and the lower pin-shaped protrusions of the adjacent heat exchange tubes may be in contact with each other.

The upper pin-shaped protrusions may be arranged on an upper surface of each of the corresponding ridges of the upper plate at positions spaced apart from each other at regular intervals. The lower pin-shaped protrusions may be arranged on a lower surface of each of the corresponding ridges of the lower plate at positions spaced apart from each other at regular intervals.

The upper pin-shaped protrusions and the lower pin-shaped protrusions may be disposed at positions at which the recesses of the upper plate cross over the recesses of the lower plate.

Each of the upper pin-shaped protrusions may have a contact surface on an upper surface thereof, and each of the lower pin-shaped protrusions may have a contact surface on a lower surface thereof.

Furthermore, a cross-section of each of the upper and lower pin-shaped protrusions may have one shape selected from a trapezoidal shape, a round shape and a rectangular shape.

The protrusions may comprise a plurality of bar-shaped protrusions provided between the ridges of the upper and lower plates. Each of the bar-shaped protrusions extends in a longitudinal direction of the ridges. A height of each of the bar-shaped protrusions may be greater than a height of the ridges, and the bar-shaped protrusions of the adjacent heat exchange tubes may be in contact with each other.

The recesses formed in the facing surfaces of the upper and lower plates may comprise a plurality of first recesses formed at sides opposite to the respective ridges, and a plurality of second recesses formed at sides opposite to the respective bar-shaped protrusions.

Each of the bar-shaped protrusions of the upper plate may have a contact surface on an upper surface thereof, and each of the bar-shaped protrusions of the lower plate may have a contact surface on a lower surface thereof.

A cross-section of each of the bar-shaped protrusions of the upper and lower plates may have one shape selected from a trapezoidal shape, a round shape and a rectangular shape.

A positioning depression and a positioning protrusion may be respectively formed at predetermined positions corresponding to each other on portions at which the upper plate is in contact with the lower plate.

In a transmission oil cooler according to the present invention, upper and lower flanges are provided around inlet and outlet ports of upper and lower plates of each heat exchange tube. Thus, the assemblability and sealability between the inlet ports and the outlet ports can be enhanced. Thereby, after the assembly of the heat exchange tubes has been completed, oil or coolant can be prevented from leaking from the heat exchange tubes.

Furthermore, the cross-sectional area of the coolant path is increased by widening the interval between the heat exchange tubes, thus enhancing the heat exchange efficiency.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing a transmission oil cooler, according to a first embodiment of the present invention;
FIG. 2 is a partially-broken perspective view of the transmission oil cooler taken along the longitudinal direction according to an embodiment not according to the present invention;
FIG. 3 is an exploded perspective view showing an upper plate and a lower plate of a heat exchange tube according to the first embodiment of the present invention;
FIG. 4 is a partially-broken perspective view of the transmission oil cooler taken along the longitudinal and transverse directions according to embodiments not according to the present invention;
FIG. 5 is a side sectional view of the transmission oil cooler according to embodiment not according to the present invention;
FIG. 6 is a front sectional view of the transmission oil cooler according to an embodiment not according to the present invention;
FIG. 7 is a front sectional view of a modification of the transmission oil cooler according to the first embodiment of the present invention;
FIG. 8 is an exploded front sectional view of a modification of the transmission oil cooler of FIG. 7;
FIG. 9 is a partially-broken perspective view of a transmission oil cooler taken along the longitudinal direction according to a further embodiment not according to the present invention;
FIG. 10 is an exploded perspective view showing an upper plate and a lower plate of a heat exchange tube according to a further embodiment not according to the present invention;
FIG. 11 is a partially-broken perspective view of the transmission oil cooler taken along the longitudinal and transverse directions according to a further embodiment not according to the present invention;
FIG. 12 is a side sectional view of the transmission oil cooler according to a further embodiment not according to the present invention;
FIG. 13 is a front sectional view of the transmission oil cooler according to a further embodiment not according to the present invention;
FIG. 14 is a front sectional view of the transmission oil cooler according to a second embodiment of the present invention; and
FIG. 15 is an exploded front sectional view of a modification of the transmission oil cooler of FIG. 14.

### DESCRIPTION OF THE PREFERRED EMBODIMENTS

Hereinafter, preferred embodiments of the present invention will be described in detail with reference to the attached drawings.

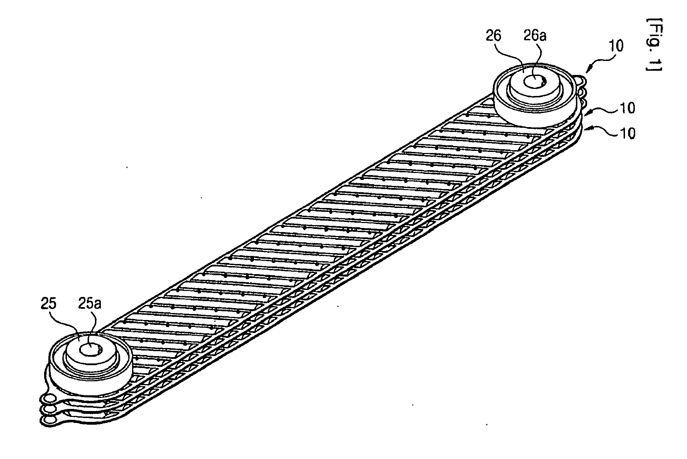

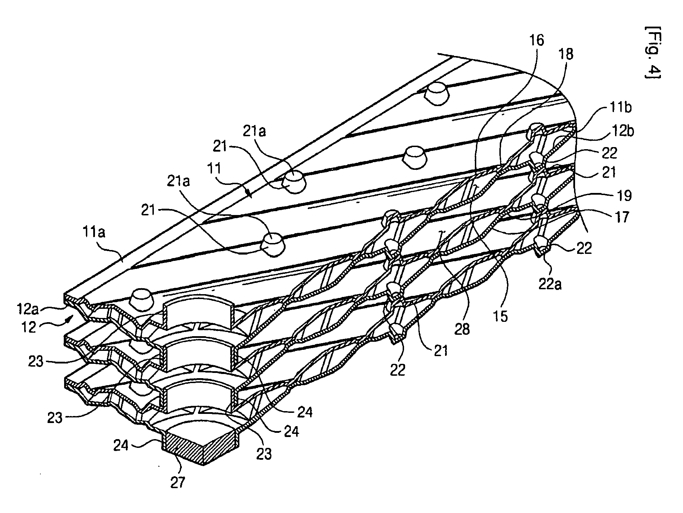

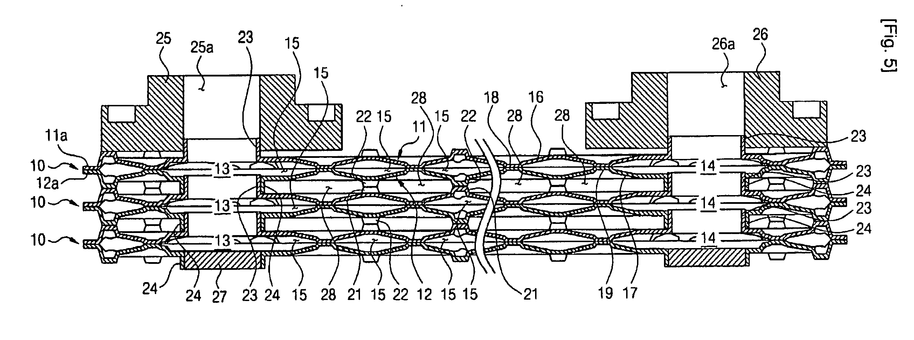

FIGS. 1 through 6 illustrate a transmission oil cooler, according to an embodiment not part of the present invention.

As shown in the drawings, the transmission oil cooler includes a plurality of heat exchange tubes 10 which are stacked one on top of another.

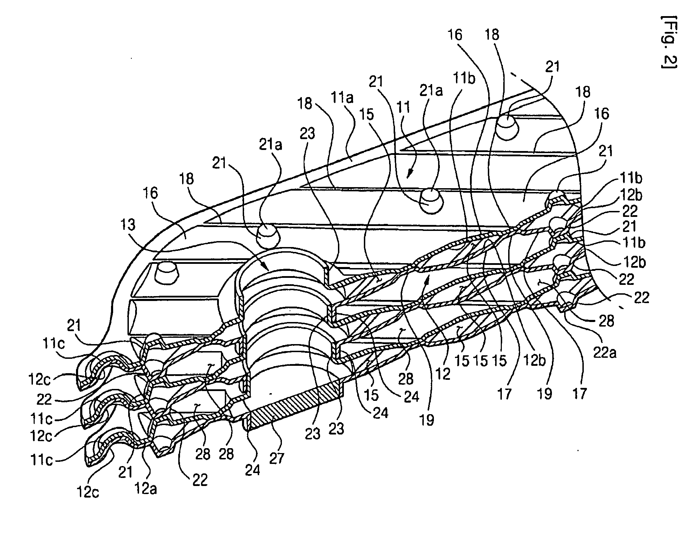

As shown in FIG. 2, each heat exchange tube 10 has an oil path 15 along which oil passes. The heat exchange tube 10 comprises an upper plate 11 and a lower plate 12 which are coupled to each other. It is desirable that the upper plate 11 and the lower plate 12 be coupled to each other by bonding the perimeters 11a and 12a thereof to each other.

The upper plate 11 and the lower plate 12 are made of metal, such as aluminum, etc., which has superior heat conductivity. The perimeters 11a and 12a of the upper and lower plates 11 and 12 are bonded to each other by brazing or the like.

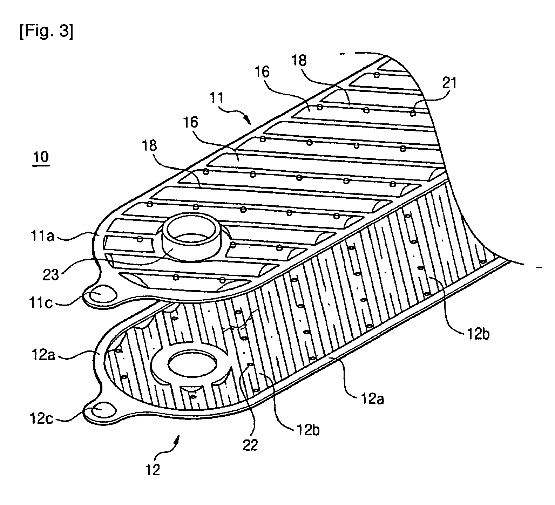

As shown in FIGS. 2 and 3, ridges 16 and valleys 18 are continuously and alternately formed on the upper surface of the upper plate 11. Ridges 17 and valleys 19 are continuously and alternately formed on the lower surface of the lower plate 12. The ridges 16 and the valleys 18 extend parallel to each other in a diagonal direction of the upper plate 11. The ridges 17 and the valleys 19 also extend parallel to each other in a diagonal direction of the lower plate 12. The ridges 16 and the valleys 18 of the upper plate 11 cross over the ridges 17 and the valleys 19 of the lower plate 12.

A plurality of recesses 11b and 12b are formed in the facing surfaces of the upper and lower plates 11 and 12 by the ridges 16 and 17 and the valley 18 and 19. The recesses 11b and 12b are respectively formed at sides opposite to the ridges 16 and 17. Thus, the recesses 11b of the upper plate 11 also cross over the recesses 12b of the lower plate 12. In addition, the recesses 11b extend parallel to each other in the diagonal direction of the upper plate 11, and the recesses 12b also extend parallel to each other in the diagonal direction of the lower plate 12. The ridges 16 and 17, the valleys 18 and 19 and the recesses 11b and 12b may be formed in the upper and lower plates 11 and 12 by a molding or embossing process.

As such, in the present invention, the oil path 15 forms a cross structure because the recesses 11b and 12b of the upper and lower plates 11 and 12 cross over each other. Thus, oil can flow in a zigzag manner along the oil path 15. Thereby, the capacity to treat flowing oil can be increased, and the heat exchange efficiency between oil and coolant can be enhanced by increasing the contact area of oil.

Furthermore, a coolant path 28 along which radiator coolant passes is formed between the adjacent heat exchange tubes 10 which are stacked one on top of the other. The coolant path 28 is formed by spacing the heat exchange tubes 10 apart from each other by a predetermined distance.

In the present invention, protrusions 21 and 22 are provided on opposite sides of each heat exchange tube 10 to increase and maintain the distance by which the adjacent heat exchange tubes 10 are spaced apart from each other.

Thanks to the protrusions 21 and 22, the cross-sectional area of the coolant path 28 can be increased without reducing the cross-sectional area of the oil path 15. In the first embodiment, the protrusions 21 and 22 are discontinuously formed along the longitudinal directions of the ridges 16 and 17, respectively.

In detail, the protrusions 21 and 22 according to the first embodiment comprise upper pin-shaped protrusions 21 which protrude from the upper surface of the upper plate 11, and lower pin-shaped protrusions 22 which protrude from the lower surface of the lower plate 12. Particularly, the upper pin-shaped protrusions 21 are formed on the upper surface of the ridges 16 of the upper plate 11 and are spaced apart from each other at regular intervals. The lower pin-shaped protrusions 22 are formed on the lower surface of the ridges 17 of the lower plate 12 and are spaced apart from each other at regular intervals. In other words, the upper pin-shaped protrusions 21 and the lower pin-shaped protrusions 22 are discontinuously formed on the ridges 16 and 17, respectively.

The lower pin-shaped protrusions 22 of the heat exchange tube 10 which is disposed at the upper position come into contact with the respective upper pin-shaped protrusions 21 of the heat exchange tube 10 which is disposed at the lower position. As such, because the pin-shaped protrusions 21 and 22 are brought into contact with each other and thus supported by each other, the distance by which the adjacent heat exchange tubes 10 are spaced apart from each other can be increased and maintained. Thereby, the cross-sectional area of the coolant path 28 is increased. Furthermore, the pin-shaped protrusions 21 and 22 which come into contact with each other are bonded to each other by welding or the like. Contact surfaces 21a and 22a are respectively formed on the upper surfaces of the upper pin-shaped protrusions 21 and the lower surfaces of the lower pin-shaped protrusions 22. The bonding of the pin-shaped protrusions 21 and 22 can be facilitated by contact between the contact surfaces 21a and 22a.

The cross-section of each of the upper and lower pin-shaped protrusions 21 and 22 may have a trapezoidal shape, a rectangular shape, or a round shape, such as an elliptical or circular shape. Furthermore, in the case where the pin-shaped protrusions 21 and 22 have trapezoidal or rectangular shapes, the bonding of the contact surfaces 21a and 22a of the pin-shaped protrusions 21 and 22 can be further facilitated.

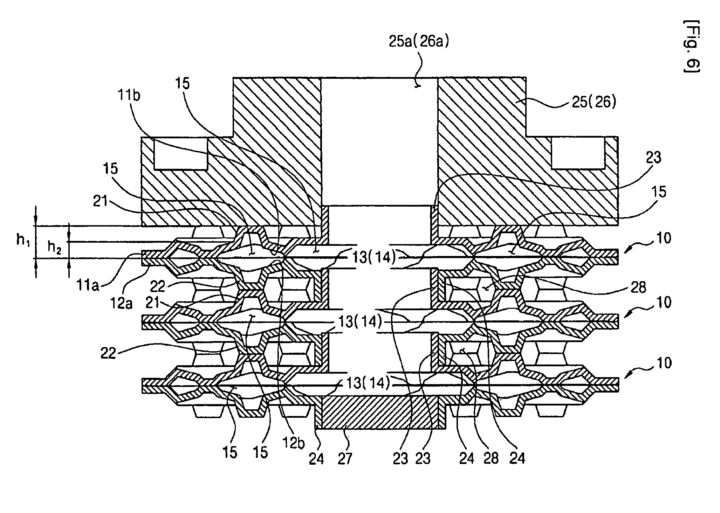

As shown in FIG. 6, it is desirable that a height h1 of each of the upper and lower plates 11 and 12 including the ridges 16 and 17 and the upper and lower pin-shaped protrusions 21 and 22 be less than twice a height h2 of each ridge 16, 17.

In addition, the upper pin-shaped protrusions 21 and the lower pin-shaped protrusions 22 are disposed at positions at which the recesses 11b of the upper plate 11 cross over the recesses 12b of the lower plate 12, thus making the stacked structure of the heat exchange tubes 10 more stable.

Furthermore, a positioning depression 11c and a positioning protrusion 12c are respectively formed at corresponding predetermined positions on the perimeters 11a and 12a of the upper plate 11 and the lower plate 12. Positioning of the upper and lower plates 11 and 12 to each other can be facilitated by the positioning depression 11c and protrusions 12c. Therefore, operation of temporarily coupling the upper plate 11 to the lower plate 12 can be easily and rapidly conducted. Thereby, the coupling between the upper and lower plates 11 and 12 can become precise and reliable.

Relatedly, each heat exchange tube 10 has an inlet port 13 formed in a first end thereof and an outlet port 14 formed in a second end thereof. The inlet port 13 and the outlet port 14 communicate with the oil path 15. Furthermore, the inlet ports 13 of the heat exchange tubes 10 communicate with each other, and the outlet ports 14 of the heat exchange tubes 10 also communicate with each other.

The upper plate 11 includes an upper flange 23 which is provided around each of the inlet port 13 and the outlet port 14 and protrudes upwards from the upper surface of the upper plate 11. The lower plate 12 includes a lower flange 24 which is provided around each of the inlet port 13 and the outlet port 14 of the lower plate 12 and protrudes downwards from the lower surface of the lower plate 12. The upper flange 23 and the lower flange 24 are designed such that they are coupled to each other in a fitting manner. In detail, the upper flanges 23 of the heat exchange tube 10 which is disposed at the lower position are fitted into the corresponding lower flanges 24 of the heat exchange tube 10 which is disposed at the upper position, thus enhancing the sealability therebetween. Moreover, the upper flanges 23 and the lower flanges 24 that are coupled to each other can be more reliably sealed by brazing. Thereby, the inlet ports 13 and the outlet ports 14 of the heat exchange tube 10 are sealed off from the coolant path 28.

Furthermore, an inlet port cap 25 having an inlet hole 25a is coupled to the upper flange 23 of the uppermost heat exchange tube 10 which is related to the inlet port 13. An outlet port cap 26 having an outlet hole 26a is coupled to the other upper flange 23 of the uppermost heat exchange tube 10 which is related to the outlet port 14. A stopper 27 is removably or integrally coupled to each lower flange 24 of the lowermost heat exchange tube 10.

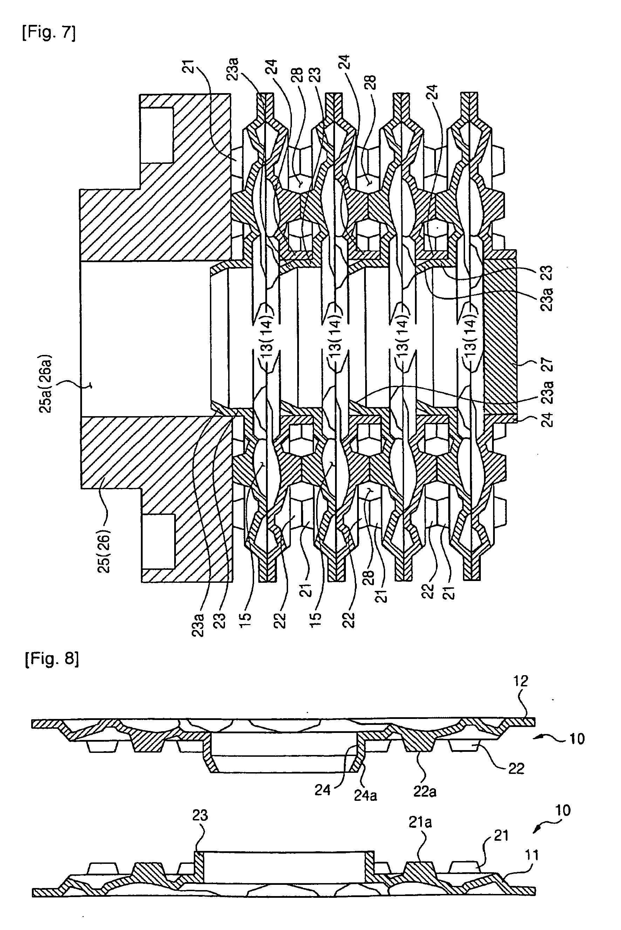

As shown in FIGS. 2, 4, 5, 6 and 7, the circumferential outer surfaces of the upper flanges 23 is fitted into the circumferential inner surfaces of the corresponding lower flanges 24. Alternatively, as shown in FIG. 8, the circumferential outer surfaces of the lower flanges 24 is fitted into the circumferential inner surfaces of the corresponding upper flanges 23. According to the invention, as shown in FIG. 7, an upper end 23a of the upper flange 23 of each heat exchange tube 10 which is fitted into the corresponding lower flange 24 of the corresponding upper heat exchange tube 10 is tapered towards the center axis of the upper flange 23. Alternatively, as shown in FIG. 8, the lower flange 24 of each heat exchange tube 10 is fitted into the corresponding upper flange 23 of the corresponding lower heat exchange tube 10, and a lower end 24a of the lower flange 24 is tapered towards the center axis thereof.

In other words, among the flanges of each heat exchange tube, flanges which are fitted into corresponding flanges of a corresponding adjacent heat exchange tube are tapered on the ends 23a, 24a thereof towards the center axes thereof.

This structure enhances the assemblability and sealability of the upper and lower flanges 23 and 24.

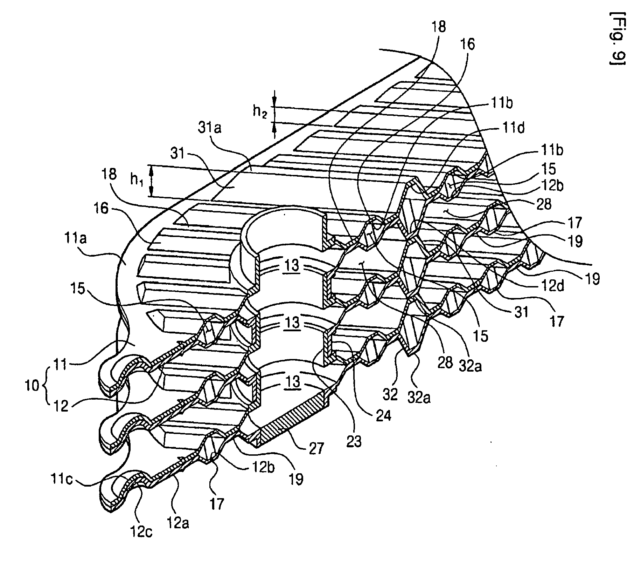

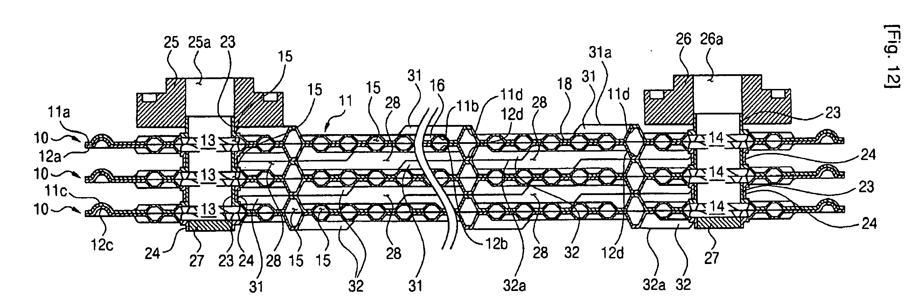

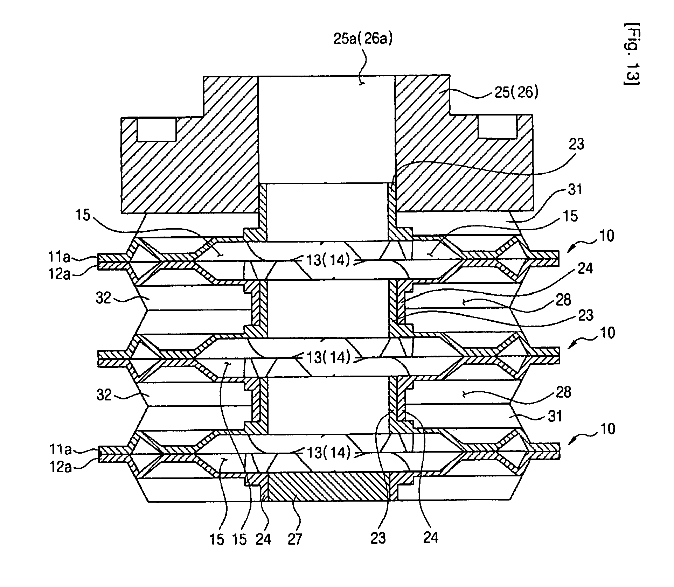

FIGS. 9 through 13 illustrate a transmission oil cooler, not according to the present invention.

As shown in the drawings, the transmission oil cooler according to the second embodiment of the present invention includes a plurality of heat exchange tubes 10. The heat exchange tubes 10 are stacked one on top of another.

Each heat exchange tube 10 has an oil path 15 along which oil passes. The heat exchange tube 10 comprises an upper plate 11 and a lower plate 12 which are coupled to each other. The upper plate 11 is coupled to the lower plate 12 in such a way that a perimeter 11a of the upper plate 11 is bonded to a perimeter 12a of the lower plate 12 by brazing or the like.

The upper plate 11 and the lower plate 12 are made of metal, such as aluminum, etc., which has superior heat conductivity. The perimeters 11a and 12a of the upper and lower plates 11 and 12 may be bonded to each other by welding.

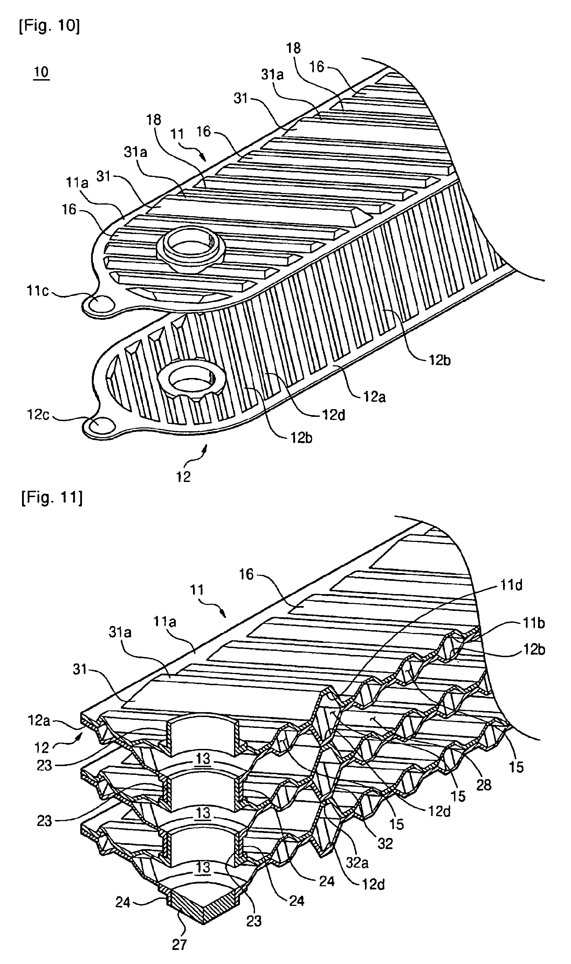

As shown in FIGS. 9 and 10, ridges 16 and valleys 18 are continuously and alternately formed on the upper surface of the upper plate 11. Ridges 17 and valleys 19 are continuously and alternately formed on the lower surface of the lower plate 12. The ridges 16 and the valleys 18 extend parallel to each other in a diagonal direction of the upper plate 11. The ridges 17 and the valleys 19 also extend parallel to each other in a diagonal direction of the lower plate 12. The ridges 16 and the valleys 18 of the upper plate 11 cross over the ridges 17 and the valleys 19 of the lower plate 12.

A plurality of first recesses 11b and 12b are formed in the facing surfaces of the upper and lower plates 11 and 12 by the ridges 16 and 17 and the valley 18 and 19. The first recesses 11b and 12b are respectively formed at sides opposite the ridges 16 and 17. Thus, the first recesses 11b of the upper plate 11 also cross over the first recesses 12b of the lower plate 12. In addition, the first recesses 11b extend parallel to each other in the diagonal direction of the upper plate 11, and the first recesses 12b also extend parallel to each other in the diagonal direction of the lower plate 12. The ridges 16 and 17, the valleys 18 and 19 and the first recesses 11b and 12b may be formed in the upper and lower plates 11 and 12 by a molding or embossing process.

As such, the oil path 15 forms a cross structure because the first recesses 11b and 12b of the upper and lower plates 11 and 12 cross over each other. Thus, oil can flow in a zigzag manner along the oil path 15. Thereby, the capacity with which flowing oil is treated can be increased, and the heat exchange efficiency between oil and coolant can be enhanced by increasing contact area of oil.

Furthermore, a coolant path 28 along which radiator coolant passes is formed between the adjacent heat exchange tubes 10 which are stacked one on top of the other. The coolant path 28 is formed by spacing the heat exchange tubes 10 apart from each other by a predetermined distance.

In a manner similar to the first embodiment, protrusions 31 and 32 are provided on the opposite sides of each heat exchange tube 10 to increase and maintain the distance by which the adjacent heat exchange tubes 10 are spaced apart from each other.

Thanks to the protrusions 31 and 32, the cross-sectional area of the coolant path 28 can be increased without reducing the cross-sectional area of the oil path 15.

In the second embodiment, the protrusions 31 and 32 are continuously formed along the longitudinal directions of the ridges 16 and 17, respectively. The protrusions 31 and 32 of the second embodiment comprise bar-shaped protrusions 31 and 32, each of which is provided between adjacent ridges 16 or 17 and extend along the longitudinal direction of the ridges 16 or 17.

The bar-shaped protrusions 31 are arranged between the ridges 16 at positions spaced apart from each other at regular intervals, and the bar-shaped protrusions 32 are arranged between the ridges 17 at positions spaced apart from each other at regular intervals. The bar-shaped protrusions 31 and 32 respectively extend parallel to the ridges 16 and 17. In other words, each bar-shaped protrusion 31, 32 continuously extends a predetermined length between the corresponding ridges 16, 17 and between corresponding valleys 18, 19. Thus, each bar-shaped protrusion 31, 32 also extends on a plane in a diagonal direction in the same manner as that of the ridges 16, 17. The height of each bar-shaped protrusion 31, 32 of the upper or lower plate 11 or 12 is greater than that of each ridge 16, 17. As shown in FIG. 9, it is desirable that the height h1 of the bar-shaped protrusion 31, 32 be less than twice the height h2 of each ridge 16, 17. Meanwhile, the ridges 16 and 17 and the bar-shaped protrusions 31 and 32 may be formed by a molding or embossing process.

Furthermore, the cross-section of each of the bar-shaped protrusions 31 and 32 of the upper and lower plates 11 and 12 may have a trapezoidal shape, a rectangular shape, or a round shape, such as an elliptical or circular shape. Contact surfaces 31a and 32a are respectively formed on the upper surfaces of the bar-shaped protrusions 31 of the upper plate 11 and the lower surfaces of the bar-shaped protrusions 32 of the lower plate 12. The bonding of the bar-shaped protrusions 31 and 32 can be facilitated by the contact between the contact surfaces 31a and 32a. Particularly, in the case where the bar-shaped protrusions 31 and 32 have trapezoidal or rectangular shapes, bonding of the contact surfaces 31a and 32a of the bar-shaped protrusions 31 and 32 can be further facilitated

In addition, the bar-shaped protrusions 31 of each heat exchange tube 10 which is disposed at an upper position cross over and come into contact with the bar-shaped protrusions 32 of the corresponding heat exchange tube 10 which is disposed at a lower position. Hence, the distance by which the adjacent heat exchange tubes 10 are spaced apart from each other can be increased and maintained. Thereby, the cross-sectional area of the coolant path 28 is increased. Furthermore, the bar-shaped protrusions 31 and 32 which come into contact with each other are bonded to each other by brazing or the like.

In the second embodiment, second recesses 11d and 12d are respectively formed in the upper and lower plates 11 and 12 at sides opposite to the bar-shaped protrusions 31 and 32. Thus, each second recess 11d, 12d is formed between the corresponding first recesses 11b, 12b of the upper or lower plate 11 or 12. Each second recess 11d, 12d also extends on the plane in the diagonal direction in the same manner as that of the first recesses 11b and 12b. Moreover, the depth of each second recess 11d, 12d is greater than that of each first recess 11b, 12b. In the same manner as the first recesses 11b and 12b, the second recesses 11d of the upper plate 11 cross over the second recesses 12d of the lower plate 12, so that the cross-sectional area of the oil path 15 can be increased.

Meanwhile, a positioning depression 11c and a positioning protrusion 12c are respectively formed at corresponding predetermined positions on the perimeters 11a and 12a of the upper plate 11 and the lower plate 12. Positioning of the upper and lower plates 11 and 12 with respect to each other can be facilitated by the positioning depression 11c and protrusions 12c. Therefore, operation of temporarily coupling the upper plate 11 to the lower plate 12 can be easily and rapidly conducted. Thereby, the coupling between the upper and lower plates 11 and 12 can become precise and reliable.

Each heat exchange tube 10 has an inlet port 13 formed in a first end thereof and an outlet port 14 formed in a second end thereof. The inlet port 13 and the outlet port 14 communicate with the oil path 15. Furthermore, the inlet ports 13 of the heat exchange tubes 10 communicate with each other, and the outlet ports 14 of the heat exchange tubes 10 also communicate with each other.

The upper plate 11 includes an upper flange 23 which is provided around each of the inlet port 13 and the outlet port 14 and protrudes upwards from the upper surface of the upper plate 11. The lower plate 12 includes a lower flange 24 which is provided around each of the inlet port 13 and the outlet port 14 of the lower plate 12 and protrudes downwards from the lower surface of the lower plate 12. The upper flanges 23 and the lower flanges 24 of the adjacent heat exchange tubes 10 are coupled to each other in a fitting manner, thus enhancing the sealability therebetween. Moreover, the upper flanges 23 and the lower flanges 24 that are coupled to each other can be more reliably sealed by brazing. Thereby, the inlet ports 13 and the outlet ports 14 of the heat exchange tube 10 are sealed off from the coolant path 28.

Furthermore, an inlet port cap 25 having an inlet hole 25a is coupled to the upper flange 23 of the uppermost heat exchange tube 10 which is related to the inlet port 13. An outlet port cap 26 having an outlet hole 26a is coupled to the other upper flange 23 of the uppermost heat exchange tube 10 which is related to the outlet port 14. A stopper 27 is removably or integrally coupled to each lower flange 24 of the lowermost heat exchange tube 10.

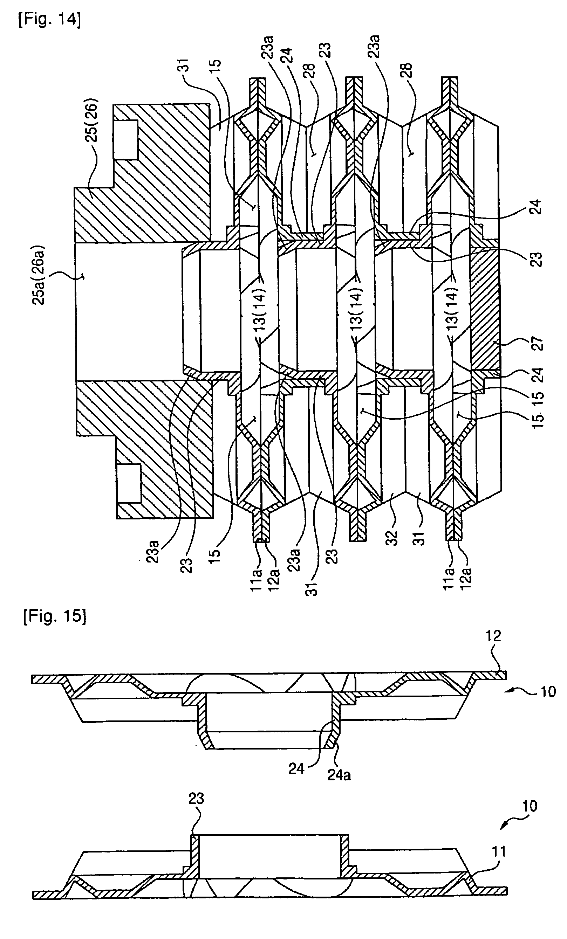

As shown in FIGS. 9, 11, 12, 13 and 14, the circumferential outer surfaces of the upper flanges 23 is fitted into the circumferential inner surfaces of the corresponding lower flanges 24. Alternatively, as shown in FIG. 15, the circumferential outer surfaces of the lower flanges 24 is fitted into the circumferential inner surfaces of the corresponding upper flanges 23.

According to the invention, shown in FIG. 14, an upper end 23a of the upper flange 23 of each heat exchange tube 10 which is fitted into the corresponding lower flange 24 of the corresponding upper heat exchange tube 10 is tapered towards the center axis of the upper flange 23. Alternatively, as shown in FIG. 15, the case where the lower flange 24 of each heat exchange tube 10 is fitted into the corresponding upper flange 23 of the corresponding lower heat exchange tube 10, and a lower end 24a of the lower flange 24 is tapered towards the center axis thereof.

In other words, among the flanges of each heat exchange tube, flanges which are fitted into corresponding flanges of a corresponding adjacent heat exchange tube are tapered on the ends 23a, 24a thereof towards the center axes thereof. This structure enhances the assemblability and sealability of the upper and lower flanges 23 and 24.

## Claims

1. A transmission oil cooler, comprising a plurality of heat exchange tubes (10) stacked one on top of another, wherein
a coolant path (28) is formed between the heat exchange tubes (10) so that a coolant passes along the coolant path (28), and each of the heat exchange tubes (10) comprises an upper plate(11) and a lower plate(12) coupled to each other by bonding perimeters (11a, 12a) thereof to each other, the heat exchange tube (10) having an oil path (15) along which oil passes,
a plurality of recesses (11b, 12b) is formed in each of facing surfaces of the upper and lower plates(11, 12), the recesses (11b) of the upper plate(11) crossing over the recesses (12b) of the lower plate(12), thus forming a cross structure of the oil path (15),
a plurality of ridges (16, 17) and a plurality of valleys(18, 19) are continuously and alternately formed on each of an upper surface of the upper plate (11) and a lower surface of the lower plate(12), the ridges (16, 17) and valleys(18, 19) extending parallel to each other in a diagonal direction,
each of the heat exchange tubes (10) has, on opposite ends thereof, an inlet port (13) through which the oil is drawn into the heat exchange tube (10), and an outlet port (14) through which the oil is discharged out of the heat exchange tube (10), and the oil paths (15) of the heat exchange tubes (10) communicate with each other through the inlet ports (13) and the outlet ports (14),
the upper plate(11) comprises an upper flange(23) provided around each of the inlet port (13) and the outlet port (14), the upper flange(23) protruding upwards from the upper surface of the upper plate(11), and the lower plate(12) comprises a lower flange(24) provided around each of the inlet port (13) and the outlet port (14), the lower flange(24) protruding downwards from the lower surface of the lower plate (12), and
protrusions (21, 22, 31, 32) are discontinuously or continuously formed along the ridges on the upper and lower plates (11, 12),
**characterized in that**
the upper flange(23) and the lower flange (24) of the adjacent heat exchange tubes (10) are coupled to each other by fitting and
that at least one of the upper and lower flanges (23, 24) is tapered inwards on an end thereof.

2. The transmission oil cooler as set forth in claim 1, wherein the protrusions (21, 22) comprise a plurality of upper pin-shaped protrusions (21) provided on the corresponding ridges of the upper plates (11), and a plurality of lower pin-shaped protrusions (22) provided on the corresponding ridges of the lower plates(12), and the upper pin-shaped protrusions (21) and the lower pin-shaped protrusions (22) of the adjacent heat exchange tubes (10) are in contact with each other.

3. The transmission oil cooler as set forth in claim 2, wherein the upper pin-shaped protrusions (21) are arranged on an upper surface of each of the corresponding ridges of the upper plate (11) at positions spaced apart from each other at regular intervals, and the lower pin-shaped protrusions (22) are arranged on a lower surface of each of the corresponding ridges of the lower plate (12) at positions spaced apart from each other at regular intervals.

4. The transmission oil cooler as set forth in claim 2, wherein the upper pin-shaped protrusions (21) and the lower pin-shaped protrusions (22) are disposed at positions at which the recesses of the upper plate (11) cross over the recesses of the lower plate.

5. The transmission oil cooler as set forth in claim 2, wherein each of the upper pin-shaped protrusions (21) has a contact surface on an upper surface thereof, and each of the lower pin-shaped protrusions (22) has a contact surface on a lower surface thereof.

6. The transmission oil cooler as set forth in claim 2, wherein a cross-section of each of the upper and lower pin-shaped protrusions (22) has one shape selected from a trapezoidal shape, a round shape and a rectangular shape.

7. The transmission oil cooler as set forth in claim 1, wherein the protrusions comprise a plurality of bar-shaped protrusions (31, 32) provided between the ridges of the upper and lower plates(11, 12), each of the bar-shaped protrusions (31, 32) extending in a longitudinal direction of the ridges(16, 17), wherein a height of each of the bar-shaped protrusions (31, 32) is greater than a height of the ridges (16, 17), and the bar-shaped protrusions (31, 32) of the adjacent heat exchange tubes (10) are in contact with each other.

8. The transmission oil cooler as set forth in claim 7, wherein the recesses (11b, 12b) formed in the facing surfaces of the upper and lower plates (11, 12) comprise a plurality of first recesses formed at sides opposite to the respective ridges, and a plurality of second recesses formed at sides opposite to the respective bar-shaped protrusions.

9. The transmission oil cooler as set forth in claim 7, wherein each of the bar-shaped protrusions (31) of the upper plate(11) has a contact surface (31 a) on an upper surface thereof, and each of the bar-shaped protrusions (32) of the lower plate(12) has a contact surface (32a) on a lower surface thereof.

10. The transmission oil cooler as set forth in claim 7, wherein a cross-section of each of the bar-shaped protrusions (31, 32) of the upper and lower plates(11, 12) has one shape selected from a trapezoidal shape, a round shape and a rectangular shape.

11. The transmission oil cooler as set forth in claim 1, wherein a positioning depression (11c) and a positioning protrusion (12c) are respectively formed at predetermined positions corresponding to each other on portions at which the upper plate (11) is in contact with the lower plate(12).

## Patentansprüche

1. Getriebeölkühler mit einer Mehrzahl von Wärmetauscherröhren (10), die übereinander gestapelt sind, wobei
ein Kühlmittelweg (28) zwischen den Wärmetauscherröhren (10) ausgebildet ist, so dass ein Kühlmittel entlang des Kühlmittelwegs (28) fließt, und wobei jede der Wärmetauscherröhren (10) eine obere Platte (11) und eine untere Platte (12) aufweist, die aneinander gekoppelt sind, indem ihre Umfassungen (11a, 12a) miteinander verbunden sind, wobei die Wärmetauscherröhre (10) einen Ölweg (15) aufweist, entlang dessen das Öl fließt,
eine Mehrzahl von Ausnehmungen (11 b, 12b) in jeder der sich gegenüber liegenden Oberflächen der oberen und unteren Platten (11, 12) ausgebildet ist, wobei die Ausnehmungen (11 b) der unteren Platte (11) sich über die Ausnehmungen (12b) der unteren Platte (12) kreuzen, wodurch eine kreuzartige Struktur des Ölwegs (15) gebildet ist,
eine Mehrzahl von Erhebungen (16, 17) und eine Mehrzahl von Vertiefungen (18, 19) kontinuierlich und abwechselnd auf jeder einer oberen Fläche der oberen Platte (11) und einer unteren Fläche der unteren Platte (12) ausgebildet sind, wobei die Erhebungen (16, 17) und Vertiefungen (18, 19) sich parallel zueinander in einer diagonalen Richtung erstrecken,
jede der Wärmetauscherröhren (10) an ihren gegenüber liegenden Enden einen Einlassanschluss (13), durch den das Öl in die Wärmetauscherröhre (10) gefördert wird, und einen Auslassanschluss (14) aufweist, durch den das Öl aus der Wärmetauscherröhre (10) ausgelassen wird, und wobei die Ölwege (15) der Wärmetauscherröhren (10) miteinander durch die Einlassanschlüsse (13) und die Auslassanschlüsse (14) kommunizieren,
wobei die obere Platte (11) einen oberen Flansch (23) aufweist, der um jeden Einlassanschluss (13) und jeden Auslassanschluss (14) herum vorgesehen ist, wobei der obere Flansch (23) sich von der oberen Fläche der oberen Platte (11) nach oben erstreckt, und wobei die untere Platte (12) einen unteren Flansch (24) aufweist, der um jeden Einlassanschluss (13) und jeden Auslassanschluss (14) herum vorgesehen ist, wobei der untere Flansch (24) sich von der unteren Fläche der unteren Platte (12) nach unten erstreckt, und
Vorsprünge (21, 22, 31, 32) diskontinuierlich oder kontinuierlich entlang der Erhebungen auf den oberen und unteren Platten (11, 12) ausgebildet sind,
**dadurch gekennzeichnet, dass**
der obere Flansch (23) und der untere Flansch (24) von aneinander angrenzenden Wärmetauscherröhren (10) durch Passung aneinander gekoppelt sind und
dass mindestens einer der oberen und unteren Flansche (23, 24) an einem Ende davon konisch nach innen verläuft.

2. Getriebeölkühler nach Anspruch 1, wobei die Vorsprünge (21, 22) eine Mehrzahl von oberen stiftförmigen Vorsprüngen (21), die auf den entsprechenden Erhebungen der oberen Platten (11) vorgesehen sind, und eine Mehrzahl von unteren stiftförmigen Vorsprüngen (22) aufweisen, die auf den entsprechenden Erhebungen der unteren Platten (12) vorgesehen sind, und wobei die oberen stiftförmigen Vorsprünge (21) und die unteren stiftförmigen Vorsprünge (22) von aneinander angrenzenden Wärmetauscherröhren (10) in Kontakt miteinander sind.

3. Getriebeölkühler nach Anspruch 2, wobei die oberen stiftförmigen Vorsprünge (21) auf einer oberen Fläche jeder der entsprechenden Erhebungen der oberen Platte (11) an Positionen angeordnet sind, die voneinander in regelmäßigen Abständen beabstandet sind, und wobei die unteren stiftförmigen Vorsprünge (22) auf einer unteren Fläche jeder der entsprechenden Erhebungen der unteren Platte (12) an Positionen angeordnet sind, die voneinander in regelmäßigen Abständen beabstandet sind.

4. Getriebeölkühler nach Anspruch 2, wobei die oberen stiftförmigen Vorsprünge (21) und die unteren stiftförmigen Vorsprünge (22) an Positionen angeordnet sind, an denen die Ausnehmungen der oberen Platte (11) über die Ausnehmungen der unteren Platte kreuzen.

5. Getriebeölkühler nach Anspruch 2, wobei jeder der oberen stiftförmigen Vorsprünge (21) eine Kontaktfläche auf einer oberen Fläche davon aufweist, und wobei jeder der unteren stiftförmigen Vorsprünge (22) eine Kontaktfläche auf einer unteren Fläche davon aufweist.

6. Getriebeölkühler nach Anspruch 2, wobei ein Querschnitt jedes der oberen und unteren stiftförmigen Vorsprünge (22) eine Form aufweist, die aus einer trapezoiden Form, einer runden Form und einer rechteckigen Form ausgewählt ist.

7. Getriebeölkühler nach Anspruch 1, wobei die Vorsprünge eine Mehrzahl von stabförmigen Vorsprüngen (31, 32) aufweisen, die zwischen den Erhebungen der oberen und unteren Platten (11, 12) vorgesehen sind, wobei jeder der stabförmigen Vorsprünge (31, 32) sich in einer Längsrichtung der Erhebungen (16, 17) erstreckt, wobei eine Höhe der stabförmigen Vorsprünge (31, 32) größer ist als eine Höhe der Erhebungen (16, 17), und wobei die stabförmigen Vorsprünge (31, 32) von aneinander angrenzenden Wärmetauscherröhren (10) in Kontakt miteinander sind.

8. Getriebeölkühler nach Anspruch 7, wobei die Ausnehmungen (11 b, 12b), die in gegenüber liegenden Flächen der oberen und unteren Platten (11, 12) ausgebildet sind, eine Mehrzahl von ersten Ausnehmungen, die an Seiten ausgebildet sind, die den entsprechenden Erhebungen gegenüber liegen, und eine Mehrzahl von zweiten Ausnehmungen aufweisen, die an Seiten ausgebildet sind, die den entsprechenden stabförmigen Vorsprüngen gegenüber liegen.

9. Getriebeölkühler nach Anspruch 7, wobei jeder der stabförmigen Vorsprüngen (31) der oberen Platte (11) eine Kontaktfläche (31 a) auf einer oberen Fläche davon aufweist, und wobei jeder der stabförmigen Vorsprünge (32) der unteren Platte (12) eine Kontaktfläche (32a) auf der unteren Fläche davon aufweist.

10. Getriebeölkühler nach Anspruch 7, wobei ein Querschnitt jedes der stabförmigen Vorsprünge (31, 32) der oberen und unteren Platten (11, 12) eine Form aufweist, die aus einer trapezoiden Form, einer runden Form und einer rechteckigen Form ausgewählt ist.

11. Getriebeölkühler nach Anspruch 1, wobei eine Positionierungsvertiefung (11 c) und ein Positionierungsvorsprung (12c) entsprechend an vorbestimmten Positionen ausgebildet sind, die einander auf Abschnitten entsprechen, an denen die obere Platte (11) in Kontakt mit der unteren Platte (12) ist.

## Revendications

1. Refroidisseur d'huile pour transmission, comprenant une pluralité de tubes d'échange de chaleur (10) empilés les uns au-dessus des autres, dans lequel
un trajet de fluide de refroidissement (28) est formé entre les tubes d'échange de chaleur (10) de sorte qu'un fluide de refroidissement passe le long du trajet de fluide de refroidissement (28), et chacun des tubes d'échange de chaleur (10) comprend une plaque supérieure (11) et une plaque inférieure (12) couplées l'une à l'autre en assemblant des périmètres de liaison (11a 12a) de celles-ci l'un à l'autre, le tube d'échange chaleur (10) ayant un trajet d'huile (15) le long duquel l'huile passe,
une pluralité d'évidements (11b, 12b) est formée dans chacune de surfaces opposées des plaques supérieure et inférieure (11, 12), les évidements (11b) de la plaque supérieure (11) traversant les évidements (12b) de la plaque inférieure (12), en formant ainsi une structure croisée du trajet d'huile (15),
une pluralité de nervures (16, 17) et une pluralité de vallées (18, 19) sont formées de manière continue et alternée sur chacune d'une surface supérieure de la plaque supérieure (11) et d'une surface inférieure de la plaque inférieure (12), les nervures (16, 17) et les vallées (18, 19) s'étendant parallèlement les uns aux autres dans une direction diagonale,
chacun des tubes d'échange de chaleur (10) a, sur des extrémités opposées de celui-ci, un orifice d'entrée (13) à travers lequel l'huile est entraînée dans le tube d'échange de chaleur (10), et un orifice de sortie (14) à travers lequel l'huile est évacuée du tube d'échange de chaleur (10), et les trajets d'huile (15) des tubes d'échange chaleur (10) communiquent les uns avec les autres par les orifices d'entrée (13) et les orifices de sortie (14),
la plaque supérieure (11) comprend une bride supérieure (23) agencée autour de chacun de l'orifice d'entrée (13) et de l'orifice de sortie (14), la bride supérieure (23) faisant saillie vers le haut à partir de la surface supérieure de la plaque supérieure (11), et la plaque inférieure (12) comprend une bride inférieure (24) agencée autour de chacun de l'orifice d'entrée (13) et de l'orifice de sortie (14), la bride inférieure (24) faisant saillie vers le bas à partir de la surface inférieure de la plaque inférieure (12), et
des saillies (21, 22, 31, 32) sont formées de manière discontinue ou continue le long des nervures sur les plaques supérieure et inférieure (11, 12),
**caractérisé en ce que**
la bride supérieure (23) et la bride inférieure (24) des tubes d'échange de chaleur (10) adjacents sont couplées l'une à l'autre par emboîtement et
qu'au moins une des brides supérieure et inférieure (23, 24) est amincie vers l'intérieur à une extrémité de celle-ci.

2. Refroidisseur d'huile pour transmission selon la revendication 1, dans lequel les saillies (21, 22) comprennent une pluralité de saillies supérieures en forme de picots (21) agencées sur les nervures correspondantes des plaques supérieures (11), et une pluralité de saillies inférieures en forme de picots (22) agencées sur les nervures correspondantes des plaques inférieures (12), et les saillies supérieures en forme de picots (21) et les saillies inférieures en forme de picots (22) des tubes d'échange de chaleur (10) adjacents sont en contact les unes avec les autres.

3. Refroidisseur d'huile pour transmission selon la revendication 2, dans lequel les saillies supérieures en forme de picots (21) sont agencées sur une surface supérieure de chacune des nervures correspondantes de la plaque supérieure (11) à des positions espacées les unes des autres à des intervalles réguliers, et les saillies inférieures en forme de picots (22) sont agencées sur une surface inférieure de chacune des nervures correspondantes de la plaque inférieure (12) à des positions espacées les unes des autres à des intervalles réguliers.

4. Refroidisseur d'huile pour transmission selon la revendication 2, dans lequel les saillies supérieures en forme de picots (21) et les saillies inférieures en forme de picots (22) sont disposées à des positions auxquelles les évidements de la plaque supérieure (11) traversent les évidements de la plaque inférieure.

5. Refroidisseur d'huile pour transmission selon la revendication 2, dans lequel chacune des saillies supérieures en forme de picots (21) a une surface de contact sur une surface supérieure de celle-ci, et chacune des saillies inférieures en forme de picots (22) a une surface de contact sur une surface inférieure de celle-ci.

6. Refroidisseur d'huile pour transmission selon la revendication 2, dans lequel une section transversale de chacune des saillies supérieures et inférieures en forme de picots (22) a une forme choisie parmi une forme trapézoïdale, une forme ronde et une forme rectangulaire.

7. Refroidisseur d'huile pour transmission selon la revendication 1, dans lequel les saillies comprennent une pluralité de saillies en forme de barres (31, 32) agencées entre les nervures des plaques supérieure et inférieure (11, 12), chacune des saillies en forme de barres (31, 32) s'étendant dans une direction longitudinale des nervures (16, 17), dans lequel une hauteur de chacune des saillies en forme de barres (31, 32) est plus grande qu'une hauteur des nervures (16, 17), et les saillies en forme de barres (31, 32) des tubes d'échange de chaleur (10) adjacents sont en contact les unes avec les autres.

8. Refroidisseur d'huile pour transmission selon la revendication 7, dans lequel les évidements (11b, 12b) formés dans les surfaces opposées des plaques supérieure et inférieure (11, 12) comprennent une pluralité de premiers évidements formés à des côtés opposés aux nervures respectives, et une pluralité de seconds évidements formés à des côtés opposés aux saillies respectives en forme de barres.

9. Refroidisseur d'huile pour transmission selon la revendication 7, dans lequel chacune des saillies en forme de barres (31) de la plaque supérieure (11) a une surface de contact (31a) sur une surface supérieure de celle-ci, et chacune des saillies en forme de barres (32) de la plaque inférieure (12) a une surface de contact (32a) sur une surface inférieure de celle-ci.

10. Refroidisseur d'huile pour transmission selon la revendication 7, dans lequel une section transversale de chacune des saillies en forme de barres (31, 32) des plaques supérieure et inférieure (11, 12) a une forme choisie parmi une forme trapézoïdale, une forme ronde et une forme rectangulaire.

11. Refroidisseur d'huile pour transmission selon la revendication 1, dans lequel une dépression de positionnement (11c) et une saillie de positionnement (12c) sont respectivement formées à des positions prédéterminées correspondant l'une à l'autre sur des portions sur lesquelles la plaque supérieure (11) est en contact avec la plaque inférieure (12).
